# EUROPEAN PATENT APPLICATION

(11) **EP 4 567 963 A1**
(43) Date of publication of application: **11.06.2025**
(21) Application number: 24217400.1
(22) Date of filing: 04.12.2024
(51) Int. Cl.: H01M 10/48, H01M 50/211, H01M 50/249, H01M 50/516, H01M 50/55, H01M 50/569, H01M 50/557, H01M 50/264

(54) **BATTERY PACK FOR A ROAD VEHICLE WITH ELECTRIC PROPULSION AND ELECTRICALLY PROPELLED ROAD VEHICLE PROVIDED WITH SAID BATTERY PACK**

(30) Priority: 05.12.2023 IT 202300025974
(71) Applicant: FERRARI S.p.A., 41100 Modena (IT)
(72) Inventor: VENTURI, Enrico, 41100 MODENA (IT); LIGABUE, Elena, 41100 MODENA (IT); SALONIA, Emanuele, 41100 MODENA (IT); ZAMPOLINI, Federico, 41100 MODENA (IT); VAINI, Andrea Alessandro, 41100 MODENA (IT)
(74) Representative: Studio Torta S.p.A.

(57) **Abstract**

Battery pack for a road vehicle with electric propulsion, in which the battery pack comprises: a plurality of planar electrochemical cells arranged in a pack side by side; in which each cell comprises terminal poles connected to each other by contacting planes at a first edge of the cells; a holder facing the terminal poles of the cells; a plurality of elastically deformable spring-conducting elements; each spring element comprising a first end coupled to the holder and a second opposite free end, in which the spring-conducting elements are arranged in rows so that when the battery pack is in use each row of the spring-conducting elements is pressed against the terminal poles and the second ends make contact with the corresponding contacting plane to realize a conductive bridge between the cells and the holder; wherein at least one of the second ends of the springs is in the form of a contact plane in which at least one split or opening is realized so as to divide the contact plane into at least two at least partially separated zones.

## Description

### CROSS-REFERENCE TO RELATED APPLICATIONS

This patent application claims priority from Italian patent application no. 102023000025974 filed on 5 December 2023, the content of which is incorporated herein by reference.

### FIELD OF THE ART

The technical field of the present invention refers to the field of electrically propelled road vehicles. This indication comprises both road vehicles with electric type propulsion only and road vehicles with double electric and endothermic propulsion. Even more in detail, the present invention refers to a battery pack, i.e. a battery pack to be mounted in the aforesaid road vehicle and configured to store electric energy to be delivered during electric propulsion. In this context the present invention will address the problem of how to improve the voltage monitoring of the individual cells forming the battery pack by optimising the geometry of the spring connections joining the poles of the cells to the voltage measurement system. Finally, the present invention also refers to a road vehicle comprising an aforesaid battery pack.

### PRIOR ART

In the automotive field, and in particular with reference to the electrically propelled road vehicles, it is known to use lithium batteries to store electrical energy to be delivered during electric propulsion. In fact, these lithium batteries offer a high energy density ideal for the implementation of electrics in the automotive sector. Currently, in fact, lithium polymers represent from a chemical point of view the state of the art in the production of high-capacity batteries. In such batteries, several cells (generally, each 3.7 V) are interconnected in series and in parallel to achieve the desired total voltage and energy density for a battery pack. The battery modules usually available on the market (not only automotive, but also consumer electronics) often comprise planar pouch batteries, which have a very limited thickness compared to the other dimensions. There are two very wide opposite sides (through which heat is dissipated almost entirely) and four thin and elongated sides, in which the positive and negative terminals of the cell are arranged on one or on two opposite sides. In detail, a known electric energy storage system for an electrically propelled vehicle comprises a battery pack consisting of a plurality of battery modules electrically connected to each other. Each battery module comprises, in turn, a support structure carrying a plurality of electrochemical cells electrically connected to each other in series and in parallel. In a known manner, there are also provided an electrical connector to connect the battery pack to the propulsion system of the vehicle and a control unit (normally called BMS - "*Battery Management System"*) which interacts with all the battery modules to control and manage each cell or sets of electrochemical cells of each battery module.

As is known, in this structure each electrochemical cell has a positive pole at one end and a negative pole at an opposite end (or at the same end) and the control unit (i.e. the BMS) connected to each pole of the electrochemical cells to control the voltage values of each electrochemical cell. Generally, the connection of the poles of the individual electrochemical cells to the control unit takes place by means of a plurality of electrical cables that extend within the storage system. The presence of this plurality of electrical cables complicates the structure and the assembly of the electrical energy storage system, leads to an increase in the volumes, in the overall dimensions and in the weights of the electrical energy storage system, and risks compromising the safety of the electrical energy storage system itself, especially if one considers that between the cables connecting the initial electrochemical cells of the battery pack and the cables connecting the final electrochemical cells of the battery pack there may be a significant voltage difference even of the order of several hundred Volts.

EP4092795, in the name of the same Applicant of the present invention, describes an alternative solution to the aforesaid electrical cables for monitoring the voltage of the electrochemical cells of the battery pack. In a nutshell, the solution described in EP4092795 envisages providing the battery with a control unit directly facing the cells and on another side protected by a special casing in which the sensor elements for detecting the voltage of the cells comprise a plurality of elastically deformable conductors, in practice a sort of spring elements, on one side directly fixed to the control unit and on the other side, in use, elastically compressed against the poles of the cell. For further details, reference is obviously made to EP4092795 as the structure of the battery pack described therein represents a starting point that can be improved thanks to the present invention. In particular, this improvement, as will emerge, concerns the contact between the spring elements described and the poles of the cell because, as can be inferred, the measurement of the voltage of the cells, and therefore the operation of the battery pack controlled by the control unit, are closely linked to the "contacting" between the cell pole ("tab") and the end of the spring. Currently, the free ends of the springs make contact with the cells at welds provided on a contacting plane to connect the poles to each other. The power of the battery passes through these welds and the performance of the overall battery module depends on them. So these welds cannot be eliminated, nor can they be reduced at will. The contacting between springs used today and the cells at the weld has some disadvantages. In fact, the welds are bad current conductors and in the contacting area they represent a roughness that can lead to the loss of contact between spring and cell. Despite taking great care of the tolerances and the dimensioning of these components to ensure that the springs have at least one part in contact with the contacting plane of the poles, unfortunately it is not always possible to guarantee good contact today. Furthermore, these disadvantages in terms of a not good contacting between the springs and the poles are not to be understood as being caused solely by the welds present on the poles but, in general and due to the current geometry of the springs, they can be generated by any impurities present on the poles that may lead to the loss or to a not good contact between the springs and the poles.

Starting from this prior art, there is therefore today a need to improve the geometry of the springs in order to ensure optimal contacting between the aforesaid tension measuring springs and the contacting plane of the cell poles regardless of the presence of any impurities, roughness or welding lines on the poles.

### DISCLOSURE OF THE INVENTION

Aim of the present invention is therefore to provide a battery pack for an electrically propelled road vehicle capable of overcoming the drawbacks described above. In addition to the battery pack itself, the present invention also covers the electric road vehicle provided with such a battery pack.

Starting point of the present invention is a battery pack comprising:
- a plurality of electrochemical cells, preferably with lithium ion technology, whose cells are planar and arranged in a pack side by side to form at least one module; as known, each cell comprises two terminal poles that according to the present invention are shown at a first edge of the cell creating a contacting plane so that they can be easily connected to each other by means of a longitudinal welding line. As indicated above, the length of the longitudinal weld along the contacting plane of the poles cannot be reduced at will because it must meet project specifications (the power of the battery passes through the weld);
- a holder (preferably in the form of a planar substrate of non-conductive material) installed in the battery so as to have a separate face facing the terminal poles of the cells;

- a plurality of spring-conducting elements, i.e. elastically deformable conductive elements preferably S-shaped, having first ends coupled to the holder and second ends shaped as a contact plane intended to make contact with the contacting plane of the poles to allow the measurement of the voltage of the cells or to feed some external devices with current. In particular, the spring-conducting elements are arranged in rows parallel to each other in positions such that, when the battery pack is in use, each row of the spring-conducting elements is pressed against a contacting plane of the terminal poles of the cells. The contacting plane is therefore substantially a rectangular plane with longitudinal development (major side) parallel to the corresponding row of the springs.

According to the prior art, the springs are S-shaped and the second ends of the springs are a contact plane of preferably rectangular shape parallel to the contacting plane of the poles and has a longitudinal development (major side) parallel to the corresponding row of the springs. According to the prior art, the contact plane (free end of the S-shaped springs) is a continuous surface of conductive material and has no cracks, fissures or openings. Such a structure is known and for example is shown in EP4092795 in the name of the same Applicant, and therefore the person skilled in the art does not need further details to understand the elements listed above and which are the starting point of the present invention. This geometry of the contact plane as a continuous plane without cracks or openings entails drawbacks. For example, if there is an impurity or roughness between the contact plane (spring) and the contacting plane (poles), at this point the contact plane is raised (not in contact) with the contacting plane and this absence of contact continues in the contact plane even in the nearby zones. In fact, being a single continuous surface, there are no portions able to deform freely with respect to the others. Since the contact plane is often found at the joint welding of the poles (for reasons of overall dimensions it is not possible to enlarge the contacting plane too much), good contact between spring and poles is not guaranteed and sometimes only delegated to a small peripheral portion of the second end of the spring.

Starting from this known structure and from these problems, the present invention proposes to modify the contact plane of the spring by providing for at least one split (or opening or slot) so as to divide the free end of the spring (contact plane) into at least two zones that are more capable of deforming relatively. In fact, thanks to this split (or opening or slot) if even one zone of the contact plane makes contact with the weld or with an impurity present on the contacting plane, the other zone is in a smaller amount retained in a raised position and can more freely make contact with the contacting plane on the side of the weld or impurities. In other words, the at least one split realizes in the contact plane at least two zones with substantially independent elasticity and deformability.

This general principle can be expressed in many forms of implementation. Some particularly useful and advantageous forms will be described below, which are to be understood as preferred but not limiting forms of the invention. For example, preferably, the contact plane is a substantially rectangular plane in which a split is made that begins at one end thereof and develops substantially up to the opposite end. In this way, thanks to this removal of material, the second end comprises at least two portions with parallel arms, separated by the split and joined at a common base end. In other words, the second end of the spring is U-shaped with arms substantially parallel to the contacting plane (the rest of the spring is not modified by the present invention). So if even one of the two arms is located at the weld or an impurity, the second arm is substantially free to reach the contacting plane. Preferably, in the example just described, it can be provided that the split is parallel to the direction of the row of the springs as well as parallel to any longitudinal welding line present on the contacting plane of the poles. Even more preferably, the split parallel to the longitudinal welding line has a width equal to or greater than the longitudinal welding width. Such a preferred solution with contact end of the spring with two U-shaped arms separated by a distance greater than the welding width ensures that at least one of the two contact arms is outside the welding area. Advantageously, this solution means that the usable contacting area no longer depends on the positioning tolerances of the parts as it can therefore be provided for a more compact contacting plan by reducing the dimension of the battery pack as a whole.

Preferably, regardless of the shape of the split or opening or slot described above, the second contact end comprises at least one embossing point, i.e. at least one point portion locally protruding with respect to the neighbouring zone towards the contact plane. These embossing points not only make points of easier contact with the contacting plane but also generate points with greater contact pressure. This greater pressure is useful because it is inversely proportional to the conduction resistance.

Preferably, regardless of the shape of the split or opening and of the presence of the embossing points, the second end may represent a contact plane inclined with respect to the contact plane (before the contact, of course) . For example, an angle between 2° and 8°, preferably of 5°, can be provided between the contact plane of the spring and the contacting plane of the poles. Also this aspect is advantageous because during the compression steps of the spring against the contacting plane of the poles a relative sliding is generated capable of removing any dirt deposited in the contact zone.

Preferably, the battery pack further comprises:
- a box-shaped support structure with a back wall, two side walls and an opening opposite the back wall from which the terminal poles of the cells are accessible;
- a cover coupled to the support structure at the opening; in this case, the holder supporting the spring elements is in the form of a substrate coupled to the cover and facing the cells.
- at least one voltage sensing device of the cells supported by the holder and connected to the spring elements to monitor the voltage of each cell.

Finally, the present invention also covers any electrically propelled road vehicle in which a battery pack as subject-matter of the appended claims is installed. Preferably, the battery pack is arranged transversely to a longitudinal direction of the vehicle and is mounted on a frame posteriorly to a passenger compartment.

### BRIEF DESCRIPTION OF THE DRAWINGS

The present invention will now be described with reference to the enclosed drawings, showing some non-limiting embodiments thereof, wherein:
- Figure 1 is a schematic and perspective view of an electrically propelled vehicle that may be provided with a battery pack in accordance with the present invention;
- Figure 2 is a schematic and perspective view of a battery pack for an electrically propelled vehicle that can be improved in accordance with the present invention;
- Figure 3 is a schematic exploded view of the battery pack of Figure 2;
- Figure 4 is an enlarged view of a detail of a module of the battery pack of Figure 3;
- Figure 5 shows an enlarged view of a detail of the battery pack of Figure 3 in which there are spring elements for measuring the voltage of the cells that connect the poles of the cells to a control unit; in this figure the coupling according to the prior art between the springs and the poles of the cells of the battery pack is schematized;
- Figures 6 and 7 show a spring according to the prior art of contact with the poles for the measurement of the tension of the cells;
- Figure 8 shows steps of use of the spring according to the technique of Figures 6 and 7;
- Figures 9 and 10 show a first example of a spring according to the present invention of contact with the poles for the measurement of the tension of the cells;
- Figure 11 shows steps of use of the spring according to the present invention of Figures 9 and 10;
- Figures 12 and 13 show further examples of springs according to the present invention of contact with the poles for the measurement of the tension of the cells.

### PREFERRED EMBODIMENTS OF THE INVENTION

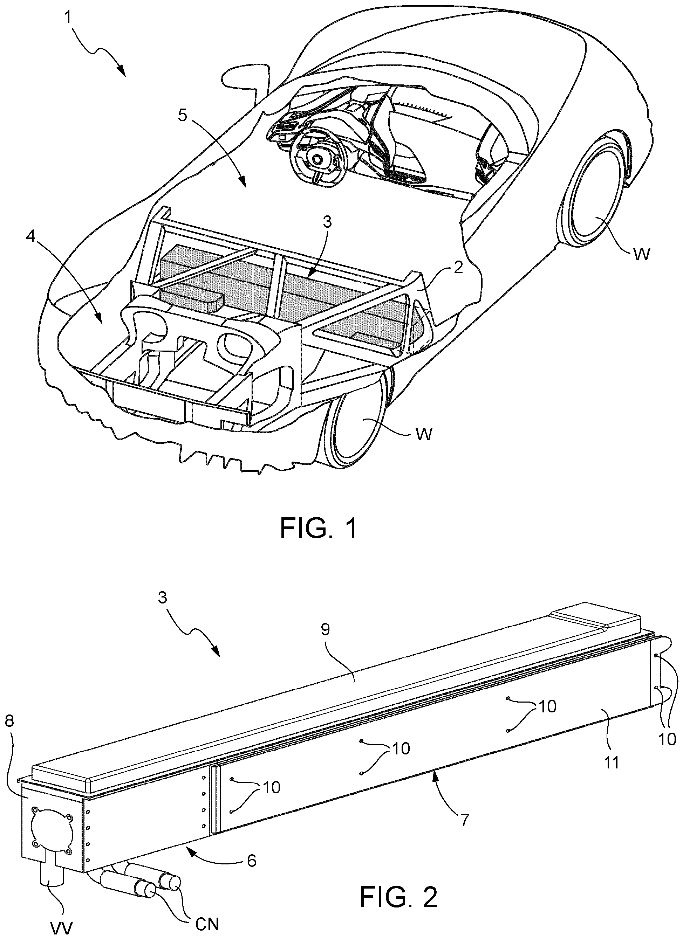

With reference to Figure 1, number 1 denotes as a whole a road vehicle provided with two front wheels W and two rear wheels W. The road vehicle 1 is an at least partially electrically propelled vehicle and is provided with a frame 2. The road vehicle 1 comprises a battery pack 3, in this example supported by the frame 2 inside a motor compartment 4. As can be seen, preferably the battery pack is arranged posteriorly to a passenger compartment 5, for example at a vehicle platform, behind the seats contained within the passenger compartment 5.

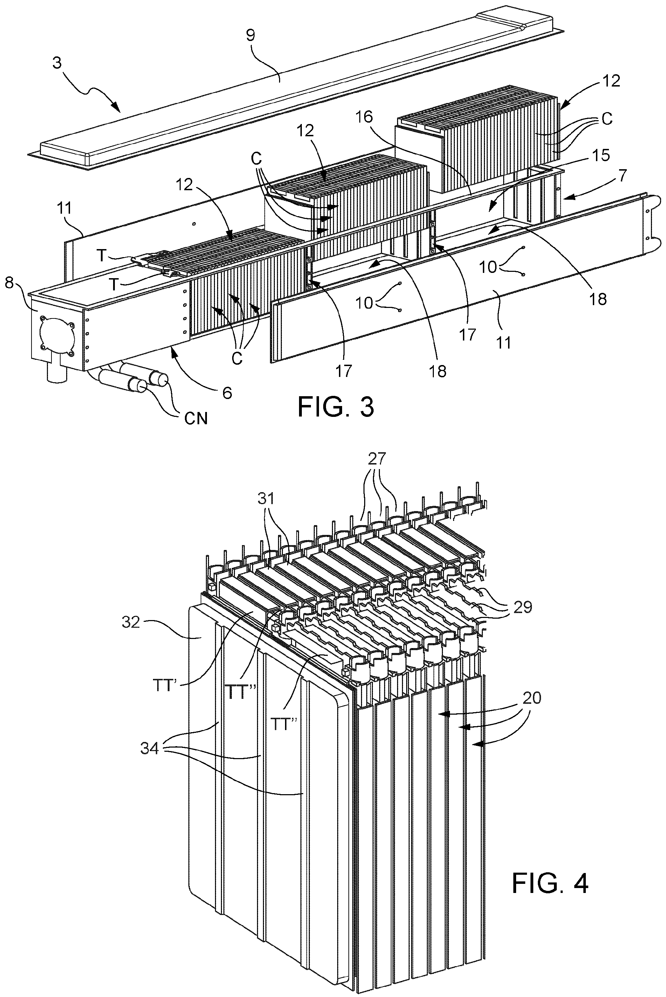

Figure 2 shows an example of a battery pack 3 that can be improved according to the present invention. In this example, the battery pack 3 has an elongated substantially parallelepiped-like shape and can be arranged transversely to a longitudinal axis of the vehicle. In particular, the battery pack 3 is suitable to be connected to an electric propulsion system (not shown) of the vehicle 1 and is adapted to store the electric energy produced by an electric machine (not shown) or released from other sources. As shown, in Figures 2 and 3 the battery pack 3 comprises at least one portion 6 configured to house a battery control and monitoring system 8 (normally called BMS - "*Battery Management System"*), adapted to control the operating parameters of the battery. The battery comprises as known a plurality of cells and the ends of such cells C are connected to the terminals T at the portion 6. Two connectors CN, configured to conduct current to and from the control system 8, emerge from the control system 8. The battery pack 3 further comprises a portion 7 configured to house the electrochemical cells C (i.e.) the active material of the battery pack 3. As shown for example in Figure 3, the vehicular battery pack 3 comprises a support structure 15 in turn comprising at least two elongated and facing perimeter elements 16 and 18, which define a box-shaped portion BP between them. The battery pack 3 further comprises one or more bulkheads 17 arranged so as to divide the box-shaped portion BP delimiting at least two housings, wherein the bulkheads 17 are arranged transversely to the two facing perimeter elements 16 and 18. In other words, the perimeter elements 16 and 18 define two parallel planes, between which the bulkheads 17 extend transversely (perpendicularly). In the non-limiting embodiment of Figure 3, the bulkheads 17 delimit, within the box-shaped portion BP, three different housings. The electrochemical cells C are of the planar type, electrically connected and parallel both to each other and to the bulkheads 17 and divided, in this example, into three two modules 12. As is visible in Figure 4, in this example the modules 12 each comprise at least two insertion plates 32, arranged at the ends of each module 12, parallel to the bulkheads 17, and configured to facilitate the insertion of each module 12 through compression inside the relative housing, so that the compression remains even after insertion. In this way, the modules 12 of the cells C are compressed outside the housing and inserted while maintaining compression. In doing so, the cells C remain compressed between the two bulkheads 17 delimiting the respective housing. In this example, each insertion plate 32 comprises guide elements 34 configured to direct the module 12 during insertion into the respective housing. As visible in the example of Figure 4, the battery pack 3 comprises a plurality of heatsink elements 20. As known and as visible in the example of Figure 4 each cell C comprises a pair of terminal poles TT', TT'' (positive and negative, i.e. cathode and anode), extending from the same side as the cells C. The poles TT', TT" are supported by a holder 27 in plastic material. To prevent contact between two adjacent cells, the holder 27 has a separator 29. In particular, the connection of the terminal poles TT', TT" is made at one or more contacting planes 31.

Returning to Figure 2, the battery pack 3 comprises at least one cooling panel 11, arranged at the at least one side surface and configured to be fixed to the support structure 15 by means of the fixing elements 10, 10'so as to dissipate the heat transmitted by the heatsink elements 20. The battery pack 3 comprises an upper opening, hermetically closed by a cover element 9.

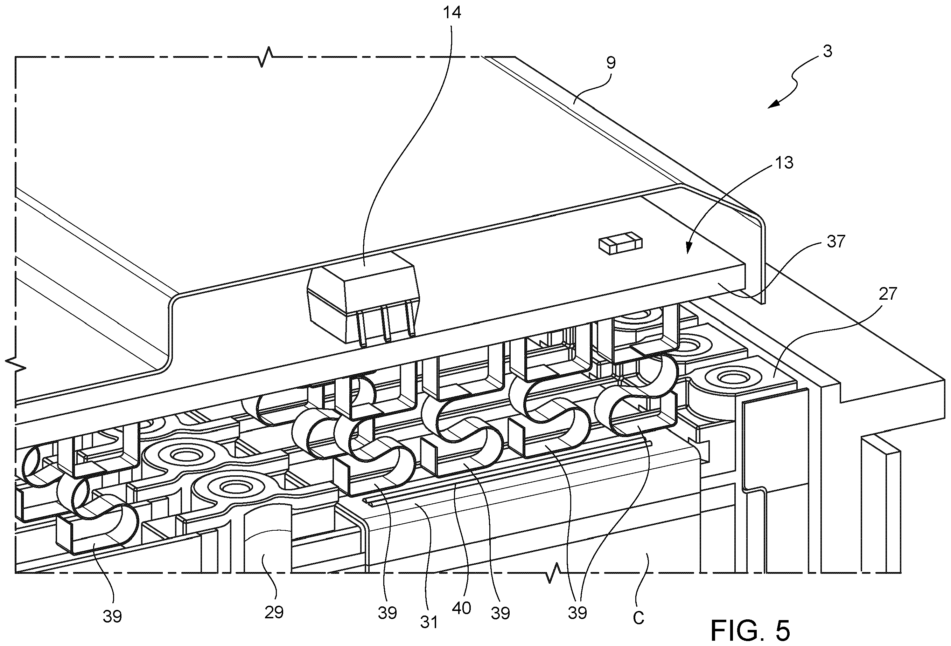

Figure 5 shows a split enlarged view of a detail of the battery pack of Figure 3. This view shows the presence of a control unit 13 comprising a substrate 37 constrained to the cover 9 facing the contacting planes 31 of the terminal poles TT', TT" of the cells. The substrate 37 supports a plurality of elements 14 configured to control the operating parameters of the electrochemical cells C of the module 12 (voltage, temperature, ...). In Figure 5 the reference 39 indicates elastically deformable conductive contact elements of the spring type (according to the prior art) for sensing the tension of the cells. These spring elements 39 are configured to be, in use, elastically compressed between the support planar substrate 37 and the contacting planes 31 of the terminal poles TT', TT". To this end, the springs 39 are arranged in parallel single rows so that more than one spring 39 is at a contacting plane 31 of the terminal poles TT' , TT'' of each electrochemical cell C. In Figure 5 the coupling according to the prior art between the springs 39 and the plane 31 of the poles of the cells of the battery pack is schematized. In particular, the coupling in the contacting plane 31 between the superimposed terminal poles TT', TT'' is made by means of a continuous welding line 40 that develops substantially along the entire length of the plane 31 and of the edge of the underlying cell. The contact between the springs 39 with the contacting plane 31 therefore takes place at the welding line 40 and this entails a series of drawbacks (described above) deriving from the current geometry of the second ends of the springs 39.

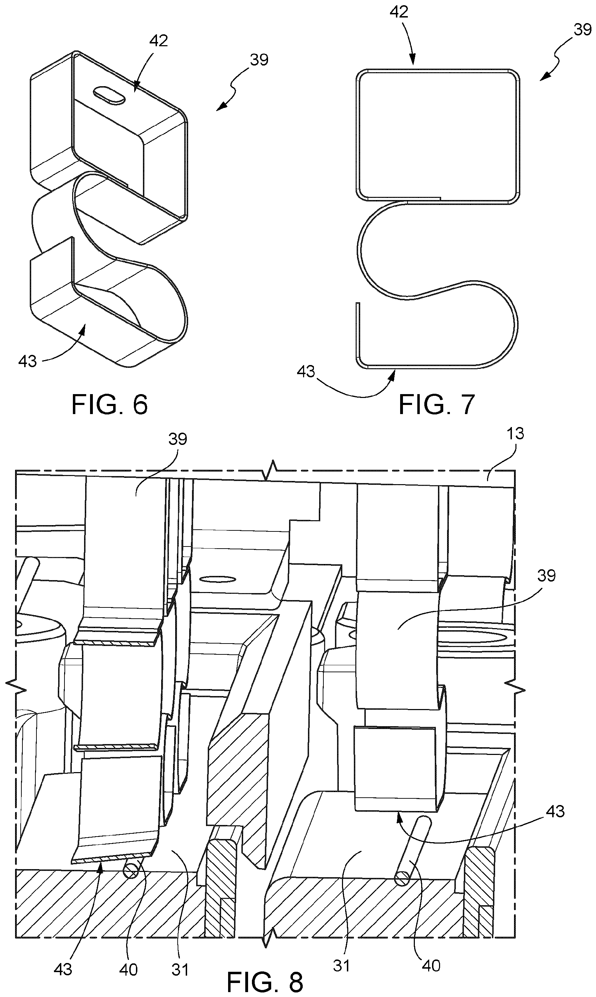

In particular, Figures 6 and 7 show one of such springs 39 according to the prior art and it can be noted that they comprise a first end 42 of connection with the substrate 13, an S-shaped body and a second opposite free end 43 shaped as a contact plane of rectangular shape parallel to the contacting plane 31 wherein said contact plane 43 is a seamless continuous rectangular plane made of a material. Figure 8 shows steps of use of the spring according to the technique of Figures 6 and 7. If the contact plane 43 has a zone at the welding line 40, this part of the contact plane 43 obviously does not make contact with the underlying contacting plane 31 and also much of the remaining zone of the contact plane 43 is retained in a raised position and does not contact the contacting plane 31 as desired.

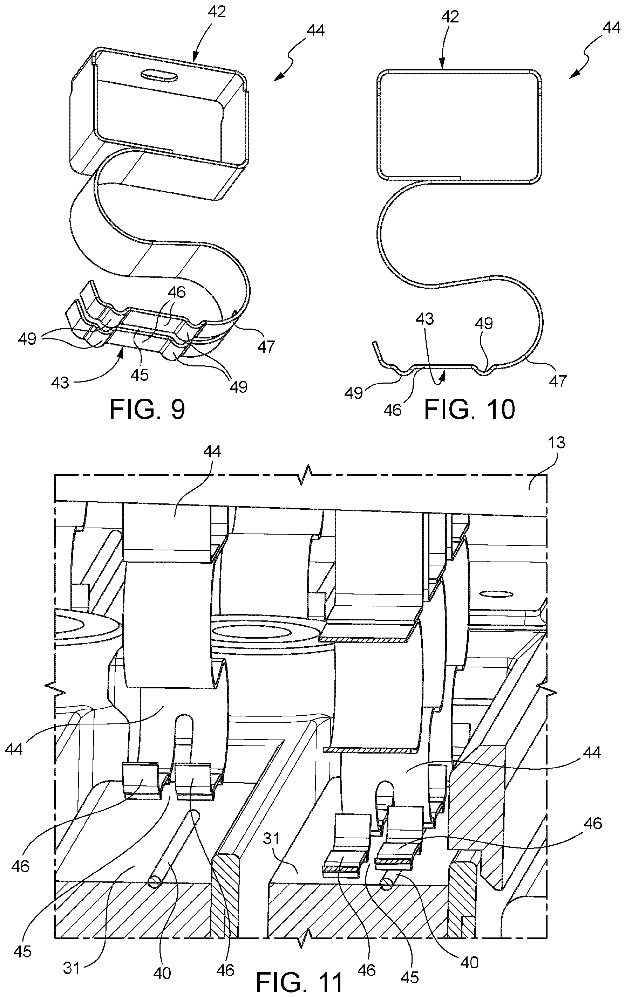

Figures 9 and 10 show a first example of a spring 44 according to the present invention of contact with the poles for the measurement of the tension of the cells. The general definition of the present invention provides to start from the contact plane 43 of the previous figures in the form of a continuous plane of material and to realize in this plane at least one split (or opening or slot or in general an elimination of the continuity by removal of material) so as to divide the contact plane into at least two zones that are more capable of deforming relatively. In the example of Figures 9 and 10 the contact plane 43 is worked to provide a split 45 which starts at a free end 48 thereof and develops substantially up to the opposite end 47 so that the contact plane 43 becomes a U-shaped body with two portions with parallel arms 16, which are separated by the split 45 and are joined at a common base end 47. In this example, the split 45 is parallel to the direction of the row of the springs 44 as well as parallel to the longitudinal welding line 40 present on the contacting plane 31. Again in this example, the split 45 has a width greater than the width of the longitudinal weld 40. In addition, Figures 9 and 10 show how on each arm 46 there are two embossing points 49, i.e. points that are locally protruding with respect to the neighbouring zone towards the contact plane 31. Figure 11 shows steps of use of the spring 44 according to the present invention of Figures 9 and 10 and allows to highlight that this solution always guarantees that at least one of the two arms 46 is outside the longitudinal weld 40 and in optimal contact with the contacting plane 31.

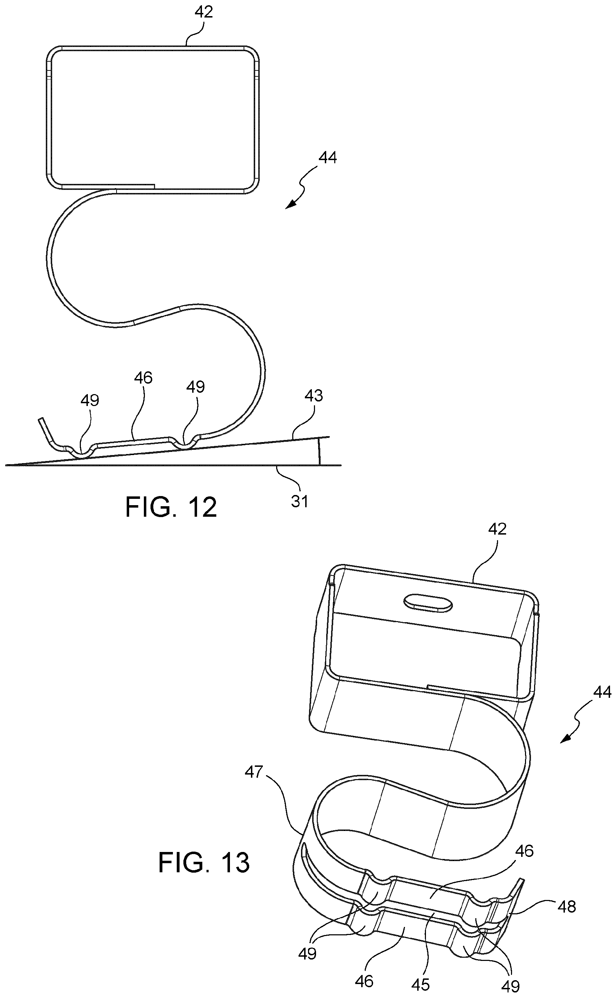

Figures 12 and 13 show two other examples of implementation of the invention in which, starting from the solution of Figures 9 and 10, the arms 46 are in a plane 43 that is inclined with respect to the contact plane 31 and wherein (Figure 13) the free ends of the arms 46 are connected by a bridge 48 to realize a split 45 in the form of a slotted opening.

## Claims

1. Battery pack for a road vehicle (1) with electric propulsion, wherein the battery pack (3) comprises:
- a plurality of planar electrochemical cells (C) arranged in a pack side by side; in which each cell (C) comprises terminal poles (TT', TT'') connected to each other by contacting planes (31) at a first edge of the cells (C);
- a support (37) facing the terminal poles (TT', TT") of the cells (C);
- a plurality of elastically deformable spring-conducting elements (44); each spring-conducting element (44) comprising a first end (42) coupled to the holder (37) and a second opposite free end (43), in which the spring-conducting elements (44) are arranged in rows so that when the battery pack (3) is in use each row of the spring-conducting elements (39) is pressed against the terminal poles (TT', TT') and the second ends (43) make contact with the corresponding contacting plane (31) to make a conductive bridge between the cells (C) and the holder (37); **characterized in that**:
at least one of the second ends (43) of the springs (44) is in the form of a contact plane substantially parallel to the contact plane (31) in which at least one split (45) or
opening or gap is made so as to divide the contact plane into at least two zones (46) at least partially separated from each other.

2. Battery pack as claimed in claim 1, wherein the second end is U-shaped and comprises at least two separate arms (46) substantially parallel to the contact plane (31).

3. Battery pack as claimed in claim 2, wherein the arms (46) are substantially parallel to the direction of the spring row (44).

4. Battery pack as claimed in any of the previous claims, wherein the second end (43) comprises at least one embossing point (49) to the contact plane (31).

5. Battery pack as claimed in any of the preceding claims, wherein the second end (43) lies, prior to contact with the bargaining plane (31) in an inclined plane relative to the contact plane (31).

6. Battery pack as claimed in claim 5, wherein the second end (43) is inclined to the contact plane (31) by an angle between 3° and 7°, preferably an angle of 5°.

7. Battery pack as claimed in any of the preceding claims 2 to 6, wherein the terminal poles (TT', TT") of each cell (C) are connected to each other by a longitudinal weld line (41) along the contact plane (31) parallel to the arms (46); the distance between the arms (46) being equal to or greater than the cross-sectional width of the longitudinal weld (41).

8. Battery pack as claimed in any of the preceding claims, wherein the battery pack also comprises:
- a box-shaped support structure (15) with a back wall and two side walls and an opening opposite the back wall from which the contact planes of the terminal poles (TT', TT'') of the cells (C) are accessible;
- a cover (9) coupled to the support structure (15) at the opening; the support (37) supporting the spring elements (39) being in the form of a substrate coupled to the cover (9) and facing the cells (C).
- at least one voltage sensing device (14) of the cells (C) supported by the holder (37) and connected to the spring elements (44) to monitor the voltage of each cell (C).

9. Electrically propelled road vehicle (1); wherein the vehicle (1) comprises a battery pack (3) according to any one of the preceding claims.

10. Vehicle as claimed in claim 9, wherein the battery pack (3) is arranged transversely to a longitudinal direction of the vehicle (1) and is mounted on a frame (2) posterior to a passenger compartment (5).
